# EUROPÄISCHE PATENTSCHRIFT

(11) **EP 3 911 546 B1**
(45) Veröffentlichungstag und Bekanntmachung des Hinweises auf die Patenterteilung: **19.07.2023**
(21) Anmeldenummer: 20700995.2
(22) Anmeldetag: 14.01.2020
(51) Int. Cl.: B60T 17/22, B60T 13/26, B60T 17/00, G01M 3/28

(54) **VERFAHREN ZUR LECKAGEÜBERWACHUNG EINER DRUCKLUFTANLAGE**
METHOD FOR MONITORING THE LEAKAGE OF A COMPRESSED AIR SYSTEM
PROCÉDÉ DE SURVEILLANCE DE LA FUITE D'UN SYSTÈME D'AIR COMPRIMÉ

(30) Priorität: 14.01.2019 DE 102019100788
(43) Veröffentlichungstag der Anmeldung: 24.11.2021
(73) Patentinhaber: ZF CV Systems Europe BV, 1170 Brussels (BE)
(72) Erfinder: BRINKMANN, Stefan, 31515 Wunstorf (DE); DIEKMEYER, Heinrich, 30890 Barsinghausen (DE); HILLBRING, Dirk, 29225 Celle (DE)
(74) Vertreter: Ohlendorf, Henrike
(86) Internationale Anmeldenummer: PCT/EP2020/050772
(87) Internationale Veröffentlichungsnummer: WO 2020/148257

(56) Entgegenhaltungen:
- EP-A2- 2 465 744
- DE-A1-102004 005 569
- DE-A1-102007 023 819
- DE-A1-102007 047 691
- US-A1- 2013 304 343

## Beschreibung

Die Erfindung betrifft ein Verfahren zur Leckageüberwachung einer Druckluftanlage eines Kraftfahrzeugs, die eine Druckluftversorgungsanlage, einen eingangsseitig an diese angeschlossenen Kompressor und mehrere ausgangsseitig an diese angeschlossene Druckluftverbraucherkreise aufweist, wobei ein Versorgungsdruck sensorisch erfasst wird, ein von diesem abgeleiteter Druckgradient mit einem vorgegebenen Grenzwert verglichen wird, und abhängig von dem Vergleichsergebnis ein Warnsignal ausgegeben wird.

Moderne elektronisch gesteuerte Druckluftversorgungsanlagen von Straßenfahrzeugen, wie insbesondere schwere Nutzfahrzeuge, und von Schienenfahrzeugen weisen eine Druckluftaufbereitungseinheit mit Filter- und Trocknereinheiten, ein Mehrkreisschutzventil mit Überströmventilen mehrerer Druckluftverbraucherkreise und eine elektronische Steuereinheit auf, welcher auch Drucksensoren zur Erfassung der Versorgungsdrücke zumindest einiger Druckluftverbraucherkreise zugeordnet sind. Mittels eines Kompressors, der üblicherweise in Kolbenbauweise ausgeführt ist und durch das Einrücken einer zugeordneten Reibungskupplung an den Antriebsmotor des jeweiligen Kraftfahrzeugs ankoppelbar oder durch das Schließen eines Entlastungsventils oder das Einschalten eines zugeordneten Elektromotors in den Förderbetrieb schaltbar ist, wird im Förderbetrieb Luft aus der Umgebung angesaugt, verdichtet und über eine Trocknerleitung der Druckluftaufbereitungseinheit in mindestens eine Hauptversorgungsleitung gefördert. Von der Hauptversorgungsleitung zweigen über jeweils ein Überströmventil eines Mehrkreisschutzventils mehrere Versorgungsleitungen von Druckluftverbraucherkreisen ab, an die zumindest teilweise jeweils ein Drucksensor zur Erfassung des jeweiligen Versorgungsdrucks angeschlossen ist.

Um die Funktionstüchtigkeit einer Druckluftanlage eines Kraftfahrzeugs, insbesondere der Betriebsbremskreise, möglichst lange aufrecht zu erhalten, ist es wichtig, eine gegebenenfalls entstandene Leckage innerhalb der Druckluftanlage frühzeitig zu erkennen. Während es relativ einfach ist, eine Leckage während eines längeren Fahrzeugstillstands zu erkennen, ist dies während eines Fahrbetriebs aufgrund der gegenläufigen Einflüsse eines Förderbetriebs des Kompressors und des betriebsbedingten Druckluftverbrauchs in den Druckluftverbraucherkreisen vergleichsweise schwierig. Um eine Leckage in der Druckluftversorgungsanlage oder in einem der Druckluftverbraucherkreise zu erkennen, sind Leckageüberwachungsverfahren bekannt, die im Prinzip darauf beruhen, einen Förder- oder Versorgungsdruck oder den Druckgradienten eines Förder- oder Versorgungsdrucks sensorisch zu erfassen und mit einem vorgegebenen Grenzwert zu vergleichen, und abhängig von dem Vergleichsergebnis gegebenenfalls ein Warnsignal auszugeben.

So ist aus der WO 2002/014 825 A1 ein Verfahren zur Leckageüberwachung einer Druckluftanlage eines Kraftfahrzeugs mit einem von dem Antriebsmotor antreibbaren Kompressor bekannt, bei dem nach dem Abstellen des Antriebsmotors der aktuelle Versorgungsdruck in allen Druckluftverbraucherkreisen sensorisch erfasst und als Funktion der Erfassungszeit in einem Datenspeicher abgespeichert wird. Die Zeitverläufe des aktuellen Versorgungsdrucks werden mit vorgegebenen Referenzdruckverläufen verglichen. Eine Leckage in einem der Druckluftverbraucherkreise wird dadurch erkannt, dass der betreffende Zeitverlauf des aktuellen Versorgungsdrucks um mehr als eine vorgegebene Toleranzschwelle von dem Referenzdruckverlauf abweicht. Infolgedessen wird der betreffende Druckluftverbraucherkreis von der Druckluftversorgung getrennt.

In einem Diagnoseverfahren einer Druckluftversorgungsanlage eines Kraftfahrzeugs gemäß der DE 10 2004 005 569 B4 ist vorgesehen, dass der Zeitverlauf des Versorgungsdrucks in mindestens einem der Druckluftverbraucherkreise sensorisch erfasst und daraus ein Druckgradient bestimmt wird. Der Druckgradient wird nach Fahrbetriebszuständen, wie gebremster Fahrzustand, ungebremster Fahrzustand und Abstellphase, klassifiziert und mit einem entsprechenden Grenzwertparameter verglichen. Bei zu starker Abweichung des Druckgradienten von dem Grenzwertparameter wird eine Leckage erkannt und der betreffende Druckluftverbraucherkreis zumindest zeitlich begrenzt von der Druckluftversorgung getrennt.

Aus der DE 10 2007 023 819 A1 ist ein Verfahren zur Dichtheitsüberwachung einer Druckluftanlage eines Kraftfahrzeugs bekannt, bei dem in mindestens einem Druckluftverbraucherkreis der Betriebszustand eines Druckluftverbrauchers und in einem zeitlichen Abstand der Versorgungsdruck erfasst wird. Aus dem Betriebszustand des Druckluftverbrauchers und der aus den Werten des Versorgungsdrucks bestimmten Druckdifferenz wird ein Kennwert ermittelt, der mit einem vorgegebenen Vergleichswert verglichen wird. Bei einer größeren Abweichung des Kennwertes von dem Vergleichswert liegt in dem betreffenden Druckluftverbraucherkreis eine Leckage vor und es wird ein Warnsignal ausgegeben. Die Ermittlung des Kennwertes erfolgt bevorzugt bei inaktivem Druckluftverbraucher, also wenn dieser keine Druckluft verbraucht, und außerhalb von Druckaufbau- und Druckabbauphasen des Druckluftverbraucherkreises.

In einem Diagnoseverfahren einer Druckluftversorgungsanlage eines Kraftfahrzeugs gemäß der DE 10 2007 025 835 B4 ist vorgesehen, dass die Zeitverläufe des Versorgungsdrucks und der Temperatur in mindestens einem Druckluftverbraucherkreis sensorisch erfasst werden und daraus mindestens eine pneumatische Zeitkonstante bestimmt wird. Durch den Vergleich der Zeitkonstante mit einem vorgegebenen Grenzwert wird bei einer größeren Abweichung eine Leckage erkannt und durch eine weitere Auswertung der Zeitverläufe der Ort der Leckage bestimmt. Störgrößen, wie zum Beispiel die Entnahme von Druckluft durch Druckluftverbraucher, sollen durch geeignete Filterung der Zeitverläufe weitgehend eliminiert werden.

Aus der EP 2465744 A2 ist ein Verfahren zum Erkennen von Lecks in Bremszylinderkreisen bekannt. Die DE 102007047691 A1 offenbart einen elektropneumatischen Feststellbremsmodulator zur Steuerung einer Feststellbremsfunktion von Bremsen eines Anhängefahrzeugs in einem Fahrzeugzug. Aus der US 2013/304343 A1 ist ein Verfahren und eine Einrichtung zum Betrieb von Druckluft-Bremsen bekannt.

Die bekannten Verfahren sind entweder nur bei abgestelltem Kraftfahrzeug anwendbar oder unterliegen weitgehenden Betriebseinschränkungen, wie nicht vorliegendem Förderbetrieb des Kompressors und/oder nicht vorliegendem Druckluftverbrauch durch einen der Druckluftverbraucher.

Der hier in Rede stehenden Erfindung lag daher die Aufgabe zugrunde, ein Verfahren zur Leckageüberwachung einer Druckluftanlage eines Kraftfahrzeugs der eingangs genannten Art vorzustellen, mit dem Leckagen ohne Funktionseinschränkungen frühzeitig erkannt und zur rechtzeitigen Vorbereitung von Wartungs- und Reparaturmaßnahmen durch die Ausgabe eines entsprechenden Warnsignals angezeigt werden können.

Diese Aufgabe ist in Verbindung mit den eingangs sowie im Anspruch 1 genannten gegenständlichen Merkmalen durch die folgenden Verfahrensschritte gelöst:
a) Fortlaufendes sensorisches Erfassen des Versorgungsdrucks p_{V} mittels eines Drucksensors in einer Hauptversorgungsleitung oder in der Versorgungsleitung mindestens eines Druckluftverbraucherkreises in einem vorgegebenen Zeittakt Δt,
b) Fortlaufende Berechnung der Druckgradienten grd_p_{V} des Versorgungsdrucks p_{V} aus jeweils mindestens zwei aufeinanderfolgend erfassten Druckwerten p_{V_i}, p_{V_i+1} und der Zeitdifferenz Δt zwischen deren Erfassung zumindest während der Förderpausen (T_{FP1}, T_{FP2}, T_{FP3}) des Kompressors,
c) Vergleich der ermittelten Druckgradienten grd_p_{V} mit einem vorgegebenen Gradientengrenzwert grd_p_{G},
d) Ausgabe eines Warnsignals, wenn der Druckgradient grd_p_{V} innerhalb eines vorgegebenen Überwachungszeitraums T_{M}, der mehrere Förderpausen T_{FP1}, T_{FP2}, T_{FP3} des Kompressors umfasst, den Gradientengrenzwert grd_p_{G} nicht überschritten hat.

Das Verfahren gemäß der Erfindung wird in einer an sich bekannten Druckluftanlage eines Kraftfahrzeugs genutzt, die eine Druckluftversorgungsanlage, einen eingangsseitig an diese angeschlossenen Kompressor und mehrere ausgangsseitig an diese angeschlossene Druckluftverbraucherkreise aufweist. Der Kompressor ist durch das Einrücken einer zugeordneten Reibungskupplung oder durch das Schließen eines Entlastungsventils oder durch das Einschalten eines zugeordneten Elektromotors in einen Förderbetrieb schaltbar, in dem dieser Druckluft aus der Umgebung ansaugt, verdichtet und über eine Trocknerleitung einer Druckluftaufbereitungseinheit in mindestens eine Hauptversorgungsleitung fördert. Von der Hauptversorgungsleitung zweigen mehrere Versorgungsleitungen von Druckluftverbraucherkreisen mit jeweils einem eingangsseitigen Überströmventil eines Mehrkreisschutzventils ab, an die zumindest teilweise jeweils ein Drucksensor und/oder ein Druckluftbehälter angeschlossen ist.

Das vorgeschlagene Überwachungsverfahren geht davon aus, dass innerhalb des Überwachungszeitraums T_{M} mehrere Förderpausen des Kompressors vorkommen, in denen in größerem Umfang Druckluft in den Druckluftverbraucherkreisen entnommen wird, und der vorgegebene Gradientengrenzwert grd_p_{G} deshalb von dem Druckgradienten grd_p_{V} des Versorgungsdrucks p_{V} nicht überschritten wird. Ebenso geht das Verfahren davon aus, dass innerhalb des Überwachungszeitraums T_{M} mehrere Förderpausen des Kompressors vorkommen, in denen keine oder nahezu keine Druckluft in den Druckluftverbraucherkreisen entnommen wird, und der Gradientengrenzwert grd_p_{G} deshalb von dem Druckgradienten grd_p_{V} des Versorgungsdrucks p_{V} überschritten wird, sofern keine Leckage in der Druckluftversorgungsanlage oder in einem der Druckluftverbraucherkreise vorliegt. Der Versorgungsdruck p_{V} ist ohne eine Leckage und ohne die Entnahme von Druckluft in den Verbraucherkreisen konstant, so dass der Druckgradient grd_p_{V} in diesem Fall den Wert Null annimmt. Der Gradientengrenzwert grd_p_{G} wird üblicherweise auf einen Wert kleiner als Null festgelegt.

Das erwähnte Warnsignal kann durch das Aufleuchten einer Warnleuchte in dem Armaturenbrett oder in dem Instrumententräger des Kraftfahrzeugs, durch das Aufleuchten eines entsprechenden Warnsymbols in dem Instrumententräger, durch die Anzeige eines entsprechenden Warntextes in einem Display des Instrumententrägers und/oder durch das Abspeichern einer entsprechenden Fehlermeldung in einem der elektronischen Steuereinheit der Druckluftversorgungsanlage zugeordneten Fehlerspeicher erfolgen.

Das erfindungsgemäße Überwachungsverfahren nutzt vorhandene Drucksensoren und ist rein softwarebasiert. Somit ist für die Anwendung dieses Überwachungsverfahrens kein zusätzlicher apparativer Aufwand erforderlich.

Um einen für das Verfahren vorteilhaften Druckverlauf des Versorgungsdrucks pV zu erzielen, ist erfindungsgemäß vorgesehen, dass Druckschwankungen des Versorgungsdrucks pv, die auf in den Druckluftverbraucherkreisen stattfindende thermodynamische Effekte zurückzuführen sind, eliminiert werden. Dies kann beispielsweise mit Hilfe mathematischer Methoden erfolgen.

Hierzu können die sensorisch erfassten Druckwerte p_{V_i}, p_{V_i+1} und/oder die berechneten Werte des Druckgradienten grd_pᵥ tiefpassgefiltert werden. Die Grenzfrequenz f_{G} der Tiefpassfilterung der sensorisch erfassten Druckwerte p_{V_i}, p_{V_i+1} liegt im Bereich zwischen 0,1 Hz und 0,3 Hz, einschließlich der Bereichsgrenzen.

Erfindungsgemäß werden die berechneten Werte des Druckgradienten grd_p_{V} nach einem festgestellten starken Abfall des Versorgungsdrucks p_{V} für eine festgelegte Zeitspanne T_{A} tiefpassgefiltert. Nach einem größeren Abfall des Versorgungsdrucks p_{V}, der durch die Entnahme einer größeren Druckluftmenge in einem der Druckluftverbraucherkreise verursacht werden kann, stellt sich anschließend ein auf thermodynamische Effekte beruhender Druckanstieg ein. Durch das Tiefpassfiltern der berechneten Werte des Druckgradienten grd_p_{V} wird dieser störende Effekt eliminiert.

Alternativ oder zusätzlich zu dieser Tiefpassfilterung ist erfindungsgemäß zu diesem Zweck auch vorgesehen, dass die Berechnung der Werte des Druckgradienten grd_p_{V} oder der Vergleich des Druckgradienten grd_p_{V} mit dem Gradientengrenzwert grd_p_{G} nach einem festgestellten starken Abfall einer zuvor festgelegten größeren Verringerung des Versorgungsdrucks p_{V} für eine zuvor festgelegte Zeitspanne T_{A} ausgesetzt wird. Außerdem kann vorgesehen sein, dass der Vergleich des Druckgradienten grd_pᵥ mit dem Gradientengrenzwert grd_p_{G} bei positiven Druckgradienten nicht erfolgt. Da ein Regenerationsbetrieb der Druckluftversorgungsanlage und ein permanenter Druckluftverbrauch durch einen Druckluftverbraucher zu einer kontinuierlichen Luftentnahme führt, die einer eventuellen Leckage überlagert wird, ist es vorteilhaft, wenn während eines Regenerationsbetriebs der Druckluftversorgungsanlage und/oder bei Vorhandensein eines Druckluftverbrauchers mit permanentem Druckluftverbrauch beim Vergleich des ermittelten Druckgradienten grd_p_{V} mit einem Gradientengrenzwert anstelle des bisherigen Gradientengrenzwertes grd_p_{G} ein entsprechend abgesenkter Gradientengrenzwert grd_p_{G_R} verwendet wird (grd_p_{G_R} < grd_p_{G}).

Der Überwachungszeitraum T_{M}, in dem die Druckgradienten grd_p_{V} des Versorgungsdrucks p_{V} in mehreren Förderpausen des Kompressors mit dem Gradientengrenzwert grd_p_{G} verglichen werden, kann unterschiedlich definiert sein.

So kann der Überwachungszeitraum T_{M} als die kumulierte Betriebszeit des Kraftfahrzeugs definiert sein.

Ebenso ist es möglich, dass der Überwachungszeitraum T_{M} als die kumulierte Fahrstrecke des Kraftfahrzeugs definiert ist.

Um den Überwachungszeitraum T_{M} konkret auf die Förderpausen des Kompressors zu beziehen, ist es vorteilhaft, wenn der Überwachungszeitraum T_{M} als die kumulierte Förderpause des Kompressors definiert ist.

Das erfindungsgemäße Überwachungsverfahren ermöglicht es, mehrere Leckagekonten für verschiedene Leckageursachen zu führen, wobei der Gradientengrenzwert grd_p_{G} und/oder die Art und Länge des Überwachungszeitraums T_{M} für die Überwachung verschiedener Leckageursachen unterschiedlich festgelegt sein können.

Zur Erkennung bestimmter Leckageursachen ist es vorteilhaft, die Berechnung der Werte des Druckgradienten grd_p_{V} nicht im gesamten Druckbereich von beispielsweise p_{V} = 10 bis 12,5 bar, sondern nur in einem begrenzten Bereich des Versorgungsdrucks p_{V} durchzuführen.

Zur weiteren Verdeutlichung der Erfindung ist der Beschreibung eine Zeichnung mit einem Ausführungsbeispiel beigefügt. In dieser zeigt
Fig. 1 ein Diagramm mit den zeitlichen Verläufen verschiedener Kennwerte einer Druckluftversorgungsanlage, und
Fig. 2 den schematischen Aufbau einer typischen Druckluftversorgungsanlage eines Kraftfahrzeugs, an welcher das erfindungsgemäße Verfahren betreibbar ist.

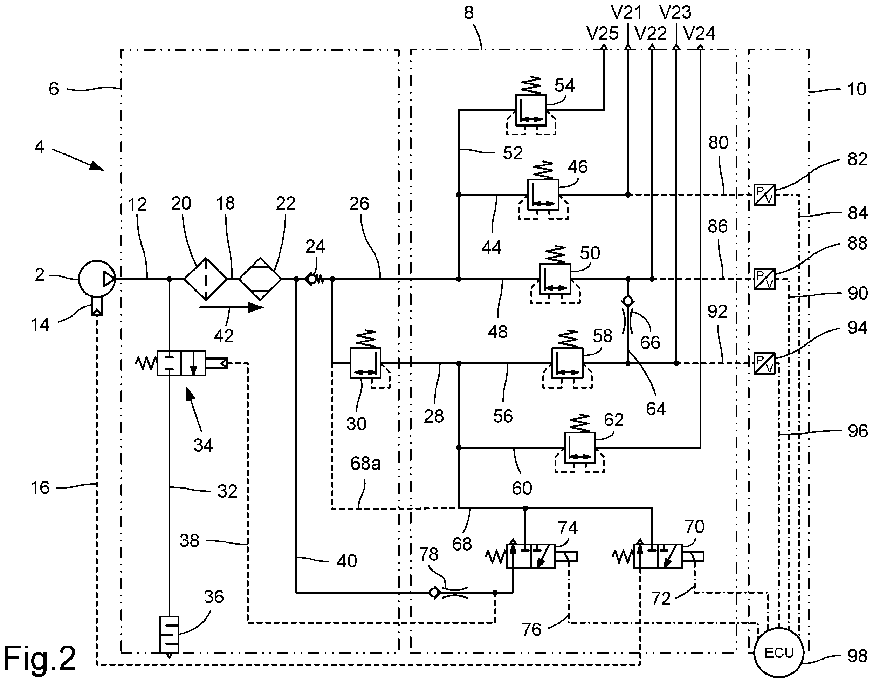

In Fig. 2 sind ein Kompressor 2 und eine elektronisch gesteuerte Druckluftversorgungsanlage 4 eines Kraftfahrzeugs in schematischer Form dargestellt, bei denen das erfindungsgemäße Verfahren zur Leckageüberwachung einer Druckluftanlage anwendbar ist. Die Druckluftversorgungsanlage 4 weist die Baugruppen einer Druckluftaufbereitungseinheit 6, einer Mehrkreisschutzventileinheit 8 und einer elektronischen Steuereinheit 10 auf.

Der Kompressor 2 ist ausgangsseitig an eine Förderleitung 12 angeschlossen und weist einen Steuerdruckeingang 14 auf. Durch die Beaufschlagung des Steuerdruckeingangs 14 aus einer angeschlossenen Steuerdruckleitung 16 mit einem ausreichend hohen Steuerdruck wird eine nicht abgebildete Reibungskupplung eingerückt, wodurch der Kompressor 2 triebtechnisch mit einem nicht abgebildeten Antriebsmotor des Kraftfahrzeugs verbunden und dadurch in den Förderbetrieb geschaltet wird. Im Förderbetrieb saugt der Kompressor 2 Luft aus der Umgebung an und fördert diese als verdichtete Druckluft in die Förderleitung 12.

Die Druckluftaufbereitungseinheit 6 weist eine Trocknerleitung 18 auf, in der in einer durch den Richtungspfeil 42 angegebenen Förderrichtung nacheinander eine Filtereinheit 20, eine Trocknereinheit 22 und ein Rückschlagventil 24 angeordnet sind. Die Trocknerleitung 18 ist eingangsseitig an die Förderleitung 12 angeschlossen und ausgangsseitig in zwei Hauptversorgungsleitungen 26, 28 verzweigt. Die zweite Hauptversorgungsleitung 28 ist über ein eingebautes Druckbegrenzungsventil 30 in ihrem Maximaldruck begrenzt. Vor der Filtereinheit 20 zweigt von der Trocknerleitung 18 eine Entlüftungsleitung 32 ab, in der ein Entlüftungsventil 34 angeordnet ist, und die über einen Schalldämpfer 36 in die Umgebung führt. Das Entlüftungsventil 34 ist als ein druckgesteuertes 2/2-Wege-Schaltventil ausgebildet, das im steuerdrucklosen Zustand geschlossen ist und durch die Beaufschlagung einer an dessen Steuerdruckeingang angeschlossenen Steuerdruckleitung 38 mit einem ausreichend hohen Steuerdruck geöffnet werden kann. Zwischen der Trocknereinheit 22 und dem Rückschlagventil 24 ist eine Regenerationsleitung 40 an die Trocknerleitung 18 angeschlossen.

Die Mehrkreisschutzventileinheit 8 umfasst fünf Überströmventile 46, 50, 54, 58, 62 eines nicht näher dargestellten Mehrkreisschutzventils, ein Regenerationssteuerventil 74, ein Kompressorsteuerventil 70 und zwei Drosselrückschlagventile 66, 78. In der Mehrkreisschutzventileinheit 8 verzweigt die erste Hauptversorgungsleitung 26 in drei Versorgungsleitungen 44, 48, 52 von drei Druckluftverbraucherkreisen V21, V22, V25. Bei den Druckluftverbraucherkreisen V21, V22, V25 handelt es sich beispielsweise um einen ersten Betriebsbremskreis des Motorfahrzeugs V21, einen zweiten Betriebsbremskreis des Motorfahrzeugs V22 und einen Luftfederungskreis V25.

Die druckbegrenzte zweite Hauptversorgungsleitung 28 verzweigt in der Mehrkreisschutzventileinheit 8 in die zwei Versorgungsleitungen 56, 60 von zwei weiteren Druckluftverbraucherkreisen V23, V24 und in eine Steuerdruckhauptleitung 68. Bei den weiteren Druckluftverbraucherkreisen V23, V24 handelt es sich beispielsweise um einen Anhänger- und Feststellbremskreis V23 und einen Nebenverbraucherkreis V24. In den Versorgungsleitungen 44, 48, 52, 56, 60 der genannten Druckluftverbraucherkreise V21, V22, V23, V24, V25 ist jeweils eines der Überströmventile 46, 50, 54, 58, 62 des Mehrkreisschutzventils angeordnet. Die mit unterbrochener Linie dargestellte alternative Steuerdruckhauptleitung 68a verdeutlicht, dass die Steuerdruckhauptleitung 68 auch zwischen dem Rückschlagventil 24 und dem vor Druckbegrenzungsventil 30 von der ersten Hauptversorgungsleitung 26 abzweigen kann.

Ausgangsseitig der betreffenden Überströmventile 58, 50 ist zwischen der Versorgungsleitung 56 des Anhänger- und Feststellbremskreises V23 und der Versorgungsleitung 48 des zweiten Betriebsbremskreises V22 eine Verbindungsleitung 64 mit dem in Richtung der Versorgungsleitung 48 des zweiten Betriebsbremskreises V22 öffnenden Drosselrückschlagventil 66 angeordnet. Über diese Verbindung kann bei einem entsprechenden Druckgefälle Druckluft aus dem Anhänger- und Feststellbremskreis V23 in den zweiten Betriebsbremskreis V22 strömen und diesen auffüllen sowie der Anhänger-und Feststellbremskreis V23 geleert werden.

An die Steuerdruckhauptleitung 68 sind das Kompressorsteuerventil 70 und das Regenerationssteuerventil 74 eingangsseitig angeschlossen. Beide Steuerventile 70, 74 sind jeweils als ein 3/2-Wege-Magnetschaltventil ausgebildet, deren eingangsseitige Anschlüsse im stromlosen Zustand abgesperrt sind, und die durch die Bestromung einer jeweils zugeordneten elektrischen Steuerleitung 72, 76 umschaltbar sind. Durch eine Bestromung des Kompressorsteuerventils 70 wird die ausgangsseitig an dieses Kompressorsteuerventils 70 angeschlossene Steuerdruckleitung 16 mit der Steuerdruckhauptleitung 68 verbunden, wodurch die Reibungskupplung am Kompressor 2 ausgerückt und der Kompressor 2 von dem Antriebsmotor abgekoppelt wird. Bei drucklosem Steuerdruckeingang 14 des Kompressors 2 ist die Reibungskupplung des Kompressors 2 eingerückt, so dass sich der Kompressor 2 dann bei laufendem Antriebsmotor im Förderbetrieb befindet. Im Förderbetrieb fördert der Kompressor 2 Druckluft entsprechend der durch den Richtungspfeil 42 angegebenen Förderrichtung durch die Förderleitung 12, die Filtereinheit 20, die Trocknerleitung 18, die Filtereinheit 20, die Trocknereinheit 22 und das Rückschlagventil 24 in die beiden Hauptversorgungsleitungen 26, 28 sowie über die Überströmventile 46, 50, 54, 58, 62 des Mehrkreisschutzventils weiter in die genannten Druckluftverbraucherkreise V21, V22, V23, V24, V25.

Durch eine Bestromung des Regenerationssteuerventils 74 wird die ausgangsseitig an dieses angeschlossene Regenerationsleitung 40, in der das in Richtung der Trocknerleitung 18 öffnende Drosselrückschlagventil 78 angeordnet ist, mit der Steuerdruckhauptleitung 68 verbunden. Hierdurch wird auch die Steuerdruckleitung 38 des Entlüftungsventils 34, die zwischen dem Regenerationssteuerventil 74 und dem Drosselrückschlagventil 78 an die Regenerationsleitung 40 angeschlossen ist, mit dem in der Steuerdruckhauptleitung 68 herrschenden Druck beaufschlagt, wodurch das Entlüftungsventil 34 geöffnet wird. Dadurch strömt dann bereits getrocknete Druckluft aus der zweiten Hauptversorgungsleitung 28 über die Steuerdruckhauptleitung 68 und die Regenerationsleitung 40 entgegen der Förderrichtung 42 durch die Trocknereinheit 22 und die Filtereinheit 20 über die Entlüftungsleitung 32 sowie den Schalldämpfer 36 in die Umgebung, wodurch die Trocknereinheit 22 regeneriert und die Filtereinheit 20 gereinigt wird.

An die Versorgungsleitungen 44, 48, 56 des ersten Betriebsbremskreises V21, des zweiten Betriebsbremskreises V22 und des Anhänger- und Feststellbremskreises V23 ist über jeweils eine Anschlussleitung 80, 86, 92 jeweils ein Drucksensor 82, 88, 94 angeschlossen. Die Drucksensoren 82, 88, 94 stehen über jeweils eine elektrische Sensorleitung 84, 90, 96 mit einer elektronischen Steuereinheit 98 (ECU) in Verbindung. Ebenso stehen das Kompressorsteuerventil 70 und das Regenerationssteuerventil 74 über ihre elektrischen Steuerleitungen 72, 76 mit der elektronischen Steuereinheit 98 in Signalverbindung. Die drei Drucksensoren 82, 88, 94 und die elektronische Steuereinheit 98 sind in der Baugruppe der elektronischen Steuereinheit 10 zusammengefasst.

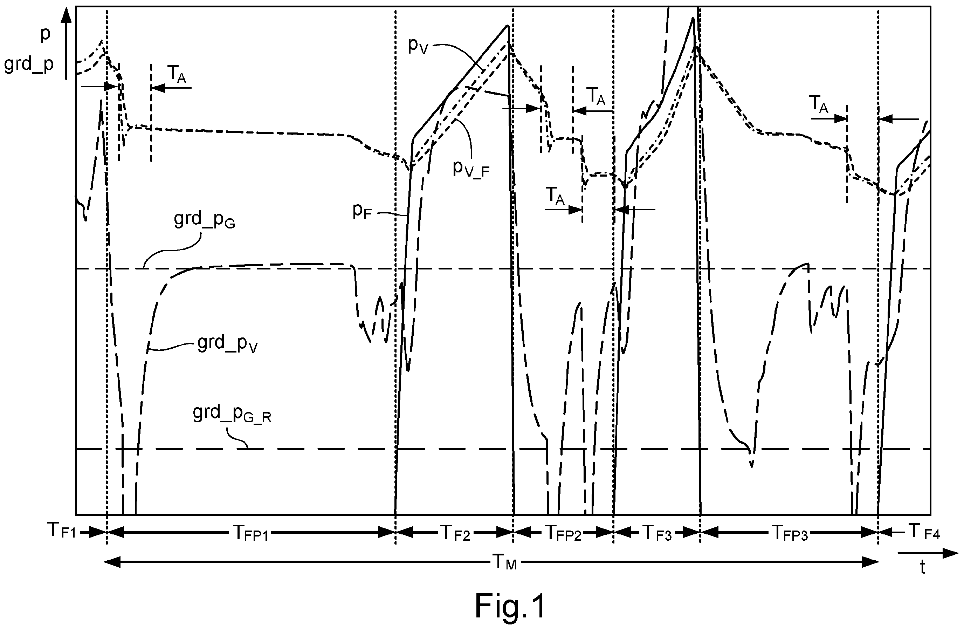

Nachfolgend wird das erfindungsgemäße Verfahren zur Leckageüberwachung einer Druckluftanlage unter Bezugnahme auf die zuvor beschriebene Ausführung und Anordnung des Kompressors 2 und der Druckluftversorgungsanlage 4 anhand des Diagramms der Fig. 1 beispielhaft erläutert.

In dem Diagramm sind der am Ausgang des Kompressors 2 in der Förderleitung 12 wirksame Förderdruck p_{F} und der in einer der Versorgungsleitungen 44, 48, 56 wirksame sowie mittels eines Drucksensors 82, 88, 94 erfasste Versorgungsdruck pV über der Zeit t dargestellt. Der Förderdruck pF des Kompressors 2 wird an sich nicht sensorisch erfasst und ist vorliegend nur zum besseren Verständnis in dem Diagramm der Fig. 1 enthalten. Des Weiteren sind in dem Diagramm der Fig. 1 die Zeitverläufe des tiefpassgefilterten Versorgungsdrucks _{pV_F}, des aus den Werten des tiefpassgefilterten Versorgungsdrucks p_{V_F} ermittelten Druckgradienten grd_p_{V}, eines Gradientengrenzwertes grd_p_{G} sowie eines für einen Regenerationsbetrieb der Druckluftversorgungsanlage 4 vorgesehenen, entsprechend abgesenkten Gradientengrenzwertes grd_p_{G_R} dargestellt.

Das Leckageüberwachungsverfahren sieht vor, dass der Versorgungsdruck p_{V} in der Versorgungsleitung 44, 48 mindestens eines mit einem Drucksensor 82, 88 versehenen Druckluftverbraucherkreises V21, V22 in einem vorgegebenen Zeittakt Δt fortlaufend sensorisch erfasst wird. Anschließend werden die ermittelten Druckwerte des Versorgungsdrucks p_{V} mit einer Grenzfrequenz f_{G}, die im Bereich zwischen 0,1 Hz und 0,3 Hz liegt (0,1 Hz ≤ f_{G} ≤ 0,3 Hz), tiefpassgefiltert. Zumindest während der Förderpausen T_{FP1}, T_{FP2}, T_{FP3} des Kompressors 2 werden dann fortlaufend die Druckgradienten grd_p_{V} des Versorgungsdrucks p_{V} aus jeweils mindestens zwei aufeinanderfolgend erfassten und tiefpassgefilterten Druckwerten p_{V_i}, p_{V_i+1} sowie der Zeitdifferenz Δt zwischen deren Erfassung berechnet.

Diese Druckgradienten grd_p_{V} werden mit einem vorgegebenen Gradientengrenzwert grd_p_{G} verglichen, der vorab, zum Beispiel während der Entwicklung und Erprobung des jeweiligen Kraftfahrzeugs oder der Applikation der Druckluftanlage in dem Kraftfahrzeug, in geeigneter Weise bestimmt wurde.

Wenn der Druckgradient grd_p_{V} des tiefpassgefilterten Versorgungsdrucks p_{V_F} innerhalb eines vorgegebenen Überwachungszeitraums T_{M}, der beispielhaft als der in dem Diagramm der Fig. 1 dargestellte Zeitraum angesehen werden kann, während der Förderpausen T_{FP1}, T_{FP2}, T_{FP3} des Kompressors 2 den Gradientengrenzwert grd_p_{G} nicht überschritten hat, wird ein Warnsignal ausgegeben.

Das Warnsignal kann durch das Aufleuchten einer Warnleuchte in dem Armaturenbrett oder in dem Instrumententräger des Kraftfahrzeugs, durch das Aufleuchten eines entsprechenden Warnsymbols in dem Instrumententräger, durch die Anzeige eines entsprechenden Warntextes in einem Display des Instrumententrägers und/oder durch das Abspeichern einer entsprechenden Fehlermeldung in einem der elektronischen Steuereinheit 10 der Druckluftversorgungsanlage 4 zugeordneten Fehlerspeicher erfolgen.

Der in dem Diagramm der Fig. 1 abgebildete Zeitraum TM umfasst drei Förderpausen T_{FP1}, T_{FP2}, T_{FP3} des Kompressors 2. Da der Druckgradient grd_p_{V} des Versorgungsdrucks p_{V} den vorgegebenen Gradientengrenzwert grd_p_{G} in der ersten Förderpause T_{FP1} und in der dritten Förderpause T_{FP3} überschritten hat, wird in dem vorliegenden Fallbeispiel von einem leckagefreien Betrieb ausgegangen und kein Warnsignal ausgegeben.

In den Förderpausen T_{FP1}, T_{FP2}, T_{FP3} gibt es aufgrund der Entnahme jeweils einer größeren Druckluftmenge in einem der Druckluftverbraucherkreise viermal einen größeren Abfall des Versorgungsdrucks p_{V}. In der nachfolgenden Zeitspanne T_{A} finden thermodynamische Effekte statt, die zu einer Druckerhöhung des Versorgungsdruckes p_{V} führen. Alternativ zu dem oben beschriebenen Verfahren mit Tiefpassfilterung kann der Druckgradient grd_p_{V} auch mit dem nicht tiefpassgefiltertem Versorgungsdruck p_{V} berechnet werden. Um den störenden Effekt des Druckanstieges zu eliminieren, wird der Vergleich des Druckgradienten grd_p_{V} mit dem Gradientengrenzwert grd_p_{G} jeweils für eine zuvor festgelegte Zeitspanne T_{A} ausgesetzt. Für die Erkennung einer Leckage ist somit nur der Verlauf des nicht tiefpassgefilterten Druckgradienten grd_p_{V} innerhalb der Förderpausen T_{FP1}, T_{FP2}, T_{FP3} des Kompressors 2 außerhalb der jeweiligen Zeitspanne T_{A} maßgeblich.

Zur weiteren Veranschaulichung ist in dem Diagramm der Fig. 1 auch ein für einen hier jeweils zu Beginn der Förderpausen T_{FP1}, T_{FP2}, T_{FP3} vorliegenden Regenerationsbetrieb der Druckluftversorgungsanlage 4 vorgesehener Gradientengrenzwert grd_p_{G_R} eingezeichnet, der gegenüber dem für einen Normalbetrieb gültigen Gradientengrenzwert grd_p_{G} entsprechend abgesenkt ist (grd_p_{G_R} < grd_p_{G}). Durch den abgesenkten Gradientengrenzwert grd_p_{G_R} wird diejenige Absenkung des Versorgungsdrucks pv und des Druckgradienten grd_p_{V} des Versorgungsdrucks p_{V} berücksichtigt, die durch den der zweiten Hauptversorgungsleitung 28 für die Regeneration der Trocknereinheit 22 entnommenen Druckluftvolumenstrom verursacht wird.

Im Rahmen des Überwachungsverfahrens können mehrere Leckagekonten für verschiedene Leckageursachen geführt werden, für die der Gradientengrenzwert grd_p_{G} und/oder die Art und Länge des Überwachungszeitraums T_{M} unterschiedlich festgelegt sein können. Ebenso kann zur Erkennung bestimmter Leckageursachen die Berechnung des Druckgradienten grd_p_{V} nur in einem begrenzten Bereich des Versorgungsdrucks p_{V} durchgeführt werden.

### Bezugszeichenliste

- 2: Kompressor
- 4: Druckluftversorgungsanlage
- 6: Druckluftaufbereitungseinheit (Baugruppe)
- 8: Mehrkreisschutzventileinheit (Baugruppe)
- 10: Elektronische Steuereinheit (Baugruppe)
- 12: Förderleitung
- 14: Steuerdruckeingang
- 16: Steuerdruckleitung
- 18: Trocknerleitung
- 20: Filtereinheit
- 22: Trocknereinheit
- 24: Rückschlagventil
- 26: Erste Hauptversorgungsleitung
- 28: Zweite Hauptversorgungsleitung
- 30: Druckbegrenzungsventil
- 32: Entlüftungsleitung
- 34: Entlüftungsventil
- 36: Schalldämpfer
- 38: Steuerdruckleitung
- 40: Regenerationsleitung
- 42: Richtungspfeil, Förderrichtung
- 44: Versorgungsleitung
- 46: Überströmventil
- 48: Versorgungsleitung
- 50: Überströmventil
- 52: Versorgungsleitung
- 54: Überströmventil
- 56: Versorgungsleitung
- 58: Überströmventil
- 60: Versorgungsleitung
- 62: Überströmventil
- 64: Verbindungsleitung
- 66: Drosselrückschlagventil
- 68: Steuerdruckhauptleitung
- 68a: Alternative Steuerdruckhauptleitung
- 70: Kompressorsteuerventil
- 72: Elektrische Steuerleitung
- 74: Regenerationssteuerventil
- 76: Elektrische Steuerleitung
- 78: Drosselrückschlagventil
- 80: Anschlussleitung
- 82: Drucksensor
- 84: Elektrische Sensorleitung
- 86: Anschlussleitung
- 88: Drucksensor
- 90: Elektrische Sensorleitung
- 92: Anschlussleitung
- 94: Drucksensor
- 96: Elektrische Sensorleitung
- 98: Elektronische Steuereinheit (ECU)
- f_{G}: Grenzfrequenz
- grd_p: Druckgradient (allgemein)
- grd_p_{G}: Gradientengrenzwert
- grd_p_{G_R}: Abgesenkter Gradientengrenzwert
- grd_p_{V}: Druckgradient des Versorgungsdrucks
- p: Druck (allgemein)
- p_{F}: Förderdruck des Kompressors
- p_{V}: Versorgungsdruck
- p_{V_F}: Tiefpassgefilteter Versorgungsdruck
- p_{V_i}: i-ter Messwert des Versorgungsdrucks
- p_{V_i+1}: (i+1)-ter Messwert des Versorgungsdrucks
- t: Zeit
- T_{A}: Zeitspanne
- T_{M}: Überwachungszeitraum
- T_{F1}: Erste Förderbetriebsdauer
- T_{F2}: Zweite Förderbetriebsdauer
- T_{F3}: Dritte Förderbetriebsdauer
- T_{F4}: Vierte Förderbetriebsdauer
- T_{FP1}: Erste Förderpause
- T_{FP2}: Zweite Förderpause
- T_{FP3}: Dritte Förderpause
- V21: Druckluftverbraucherkreis, erster Betriebsbremskreis
- V22: Druckluftverbraucherkreis, zweiter Betriebsbremskreis
- V23: Druckluftverbraucherkreis, Anhänger- und Feststellbremskreis
- V24: Druckluftverbraucherkreis, Nebenverbraucherkreis
- V25: Druckluftverbraucherkreis, Luftfederungskreis
- Δt: Zeittakt, Zeitdifferenz

## Patentansprüche

1. Verfahren zur Leckageüberwachung einer Druckluftanlage eines Kraftfahrzeugs, die eine Druckluftversorgungsanlage (4), einen eingangsseitig an diese angeschlossenen Kompressor (2) und mehrere ausgangsseitig an diese angeschlossene Druckluftverbraucherkreise (V21, V22, V23, V24, V25) aufweist, wobei ein Versorgungsdruck (pv) sensorisch erfasst wird, ein von diesem abgeleiteter Druckgradient mit einem vorgegebenen Grenzwert verglichen wird, und abhängig von dem Vergleichsergebnis ein Warnsignal ausgegeben wird, mit folgenden Verfahrensschritten:
a) Fortlaufendes sensorisches Erfassen des Versorgungsdrucks (pv) mittels eines Drucksensors in einer Hauptversorgungsleitung (26, 28) oder in der Versorgungsleitung mindestens eines Druckluftverbraucherkreises in einem vorgegebenen Zeittakt (Δt),
b) Fortlaufende Berechnung der Druckgradienten (grd_p_{V}) des Versorgungsdrucks (pv) aus jeweils mindestens zwei aufeinanderfolgend erfassten Druckwerten (p_{V_i}, p_{V_i+1}) und der Zeitdifferenz (Δt) zwischen deren Erfassung zumindest während der Förderpausen (T_{FP1}, T_{FP2}, T_{FP3}) des Kompressors (2),
c) Vergleich der ermittelten Druckgradienten (grd_p_{V}) mit einem vorgegebenen Gradientengrenzwert (grd_p_{G}),
d) Ausgabe eines Warnsignals, wenn der Druckgradient (grd_p_{V}) innerhalb eines vorgegebenen Überwachungszeitraums (T_{M}), der mehrere Förderpausen (T_{FP1}, T_{FP2}, T_{FP3}) des Kompressors umfasst, den Gradientengrenzwert (grd_p_{G}) nicht überschritten hat,
**dadurch gekennzeichnet, dass** Druckschwankungen des Versorgungsdrucks (pᵥ), die auf in den Druckluftverbraucherkreisen stattfindende thermodynamische Effekte zurückzuführen sind, eliminiert werden, indem die berechneten Werte des Druckgradienten (grd_p_{V}) nach einem festgestellten starken Abfall des Versorgungsdrucks (pv) für eine festgelegte Zeitspanne (T_{A}) tiefpassgefiltert werden, und/oder
die Berechnung der Werte des Druckgradienten (grd_p_{V}) oder der Vergleich des Druckgradienten (grd_p_{V}) mit dem Gradientengrenzwert (grd_p_{G}) nach einem festgestellten starken Abfall des Versorgungsdrucks (pv) für eine festgelegte Zeitspanne (T_{A}) ausgesetzt wird.

2. Verfahren nach Anspruch 1, wobei die sensorisch erfassten Druckwerte (p_{V_i}, p_{V_i+1}) und/oder die berechneten Werte des Druckgradienten (grd_pᵥ) tiefpassgefiltert werden.

3. Verfahren nach Anspruch 2, wobei die Grenzfrequenz (f_{G}) der Tiefpassfilterung der sensorisch erfassten Druckwerte (p_{V_i}, p_{V_i+1}) und/oder der berechneten Werte des Druckgradienten (grd_pᵥ) im Bereich zwischen 0,1 Hz und 0,3 Hz einschließlich der Bereichsgrenzen liegt (0,1 Hz ≤ f_{G} ≤ 0,3 Hz).

4. Verfahren nach einem der Ansprüche 1 bis 3, wobei der Vergleich des Druckgradienten (grd_pᵥ) mit dem Gradientengrenzwert (grd_p_{G}) bei positiven Druckgradienten nicht erfolgt.

5. Verfahren nach einem der Ansprüche 1 bis 4, wobei während eines Regenerationsbetriebs der Druckluftversorgungsanlage (4) und/oder bei Vorhandensein eines Druckluftverbrauchers mit permanentem Druckluftverbrauch beim Vergleich des ermittelten Druckgradienten (grd_p_{V}) mit einem Gradientengrenzwert anstelle des bisherigen Gradientengrenzwertes (grd_p_{G}) ein entsprechend abgesenkter Gradientengrenzwert (grd_p_{G_R}) verwendet wird (grd_p_{G_R} < grd_p_{G}).

6. Verfahren nach einem der Ansprüche 1 bis 5, wobei der Überwachungszeitraum (T_{M}) als die kumulierte Betriebszeit des Kraftfahrzeugs definiert ist.

7. Verfahren nach einem der Ansprüche 1 bis 5, wobei der Überwachungszeitraum (T_{M}) als die kumulierte Fahrstrecke des Kraftfahrzeugs definiert ist.

8. Verfahren nach einem der Ansprüche 1 bis 5, wobei der Überwachungszeitraum (T_{M}) als die kumulierte Förderpause des Kompressors (2) definiert ist.

9. Verfahren nach einem der Ansprüche 1 bis 8, wobei mehrere Leckagekonten für verschiedene Leckageursachen geführt werden, und dass der Gradientengrenzwert (grd_p_{G}) und/oder die Art und Länge des Überwachungszeitraums (T_{M}) für die Überwachung verschiedener Leckageursachen unterschiedlich festgelegt sind.

10. Verfahren nach einem der Ansprüche 1 bis 9, wobei die Berechnung der Werte des Druckgradienten (grd_p_{V}) zur Erkennung bestimmter Leckageursachen nur in einem begrenzten Bereich des Versorgungsdrucks (pv) durchgeführt wird.

## Claims

1. A method for monitoring the leakage of a compressed air system of a motor vehicle, which compressed air system comprises a compressed air supply installation (4), a compressor (2) connected thereto on the input side, and a plurality of compressed air consumer circuits (V21, V22, V23, V24, V25) connected thereto on the output side, wherein a supply pressure (pᵥ) is detected by sensors, a pressure gradient derived from this supply pressure is compared with a predetermined limit value, and a warning signal is output depending on the comparison result, the method comprising the following method steps:
a) continuously detecting the supply pressure (pᵥ) by sensors by means of a pressure sensor in a main supply line (26, 28) or in the supply line of at least one compressed air consumer circuit in a predefined time cycle (Δt),
b) continuously calculating the pressure gradients (grd_pᵥ) of the supply pressure (pᵥ) from at least two successively detected pressure values (p_{v_i}, p_{v_i+1}) and the time difference (Δt) between the detection thereof at least during the delivery pauses (T_{FP1}, T_{FP2}, T_{FP3}) of the compressor (2),
c) comparing the determined pressure gradients (grd_pᵥ) with a predefined gradient limit value (grd_pc),
d) outputting a warning signal when the pressure gradient (grd_pᵥ) within a predefined monitoring time period (T_{M}), which comprises a plurality of delivery pauses (T_{FP1}, T_{FP2}, T_{FP3}) of the compressor, has not exceeded the gradient limit value (grd_pc),
**characterized in that**
pressure fluctuations of the supply pressure (pᵥ), which are attributed to thermodynamic effects occurring in the compressed air consumer circuits, are eliminated by the calculated values of the pressure gradient (grd_pᵥ) being low-pass filtered for a set time interval (T_{A}) after an identified sharp drop in the supply pressure (pᵥ), and/or
the calculation of the values of the pressure gradient (grd_pᵥ) or the comparison of the pressure gradient (grd_pᵥ) with the gradient limit value (grd_p_{g}) does not take place for a set time interval (T_{A}) after an identified sharp drop in the supply pressure (pᵥ).

2. The method according to claim 1, wherein the sensor-detected pressure values (p_{v_i}, p_{v_i+1}) and/or the calculated values of the pressure gradient (grd_pᵥ) are low-pass filtered.

3. The method according to claim 2, wherein the limit frequency (f_{G}) of the low-pass filtering of the sensor-detected pressure values (p_{v_i}, p_{v_i+1}) and/or the calculated values of the pressure gradient (grd_pᵥ) lies in the range between 0.1 Hz and 0.3 Hz, including the range boundaries (0,1 Hz ≤ f_{G} ≤ 0,3 Hz).

4. The method according to any of claims 1 to 3, wherein the comparison of the pressure gradient (grd_pᵥ) with the gradient limit value (grd_p_{g}) does not take place at positive pressure gradients.

5. The method according to any of claims 1 to 4, wherein, during a regeneration operation of the compressed air supply installation (4) and/or in the presence of a compressed air consumer that has a permanent compressed air consumption, a correspondingly lowered gradient limit value (grd__{PG_R}), instead of the previous gradient limit value (grd_pc), is used (grd_p_{G_R} < grd_pc) when comparing the determined pressure gradient (grd_p ᵥ) with a gradient limit value.

6. The method according to any of claims 1 to 5, wherein the monitoring time period (T_{M}) is defined as the cumulative operating time of the motor vehicle.

7. The method according to any of claims 1 to 5, wherein the monitoring time period (T_{M}) is defined as the cumulative travel distance of the motor vehicle.

8. The method according to any of claims 1 to 5, wherein the monitoring time period (T_{M}) is defined as the cumulative delivery pause of the compressor (2).

9. The method according to any of claims 1 to 8, wherein a plurality of leakage accounts are kept for different leakage causes, and the gradient limit value (grd_pc) and/or the type and length of the monitoring time period (T_{M}) are set differently for monitoring different leakage causes.

10. The method according to any of claims 1 to 9, wherein, for detecting particular leakage causes, the calculation of the values of the pressure gradient (grd_pᵥ) is carried out only in a limited range of the supply pressure (pᵥ).

## Revendications

1. Procédé permettant la surveillance de fuites d'un système d'air comprimé d'un véhicule automobile, lequel système présente un système d'alimentation en air comprimé (4), un compresseur (2) raccordé audit système d'alimentation côté entrée et plusieurs circuits consommateurs d'air comprimé (V21, V22, V23, V24, V25) raccordés audit système d'alimentation côté sortie, dans lequel une pression d'alimentation (pv) est détectée par capteur, un gradient de pression dérivant de celle-ci est comparé avec une valeur limite prédéfinie, et un signal d'alarme est émis en fonction du résultat de la comparaison, comportant les étapes de procédé suivantes :
a) détection continue par capteur de la pression d'alimentation (pv) à l'aide d'un capteur de pression dans une conduite d'alimentation principale (26, 28) ou dans la conduite d'alimentation d'au moins un circuit consommateur d'air comprimé à une cadence de temps (Δt) prédéfinie,
b) calcul continu des gradients de pression (grd_p_{V}) de la pression d'alimentation (pv) à partir de respectivement au moins deux valeurs de pression (p_{V_i}, p_{V_i+1}) détectées de manière séquentielle et de la différence de temps (Δt) entre leur détection au moins pendant les pauses de refoulement (T_{FP1}, T_{FP2}, T_{FP3}) du compresseur (2),
c) comparaison des gradients de pression (grd_p_{V}) déterminés avec une valeur limite de gradient (grd_pc) prédéfinie,
d) émission d'un signal d'alarme lorsque le gradient de pression (grd_pv), au cours d'une période de surveillance (T_{M}) prédéfinie qui comprend plusieurs pauses de refoulement (T_{FP1}, T_{FP2}, T_{FP3}) du compresseur, n'a pas dépassé la valeur limite de gradient (grd_pc),
**caractérisé en ce que**
des variations de pression de la pression d'alimentation (p_{V}), lesquelles sont dues à des effets thermodynamiques se produisant dans les circuits consommateurs d'air comprimé, sont éliminées par filtrage par filtre passe-bas des valeurs calculées du gradient de pression (grd_p_{V}) après une forte diminution constatée de la pression d'alimentation (pv) pendant une durée fixe (T_{A}), et/ou
le calcul des valeurs du gradient de pression (grd_p_{V}) ou la comparaison du gradient de pression (grd_p_{V}) avec la valeur limite de gradient (grd_pc) est suspendu après une forte diminution constatée de la pression d'alimentation (pv) pendant une durée fixe (T_{A}).

2. Procédé selon la revendication 1, dans lequel les valeurs de pression (p_{V_i}, p_{V_i+1}) détectées par capteur et/ou les valeurs calculées du gradient de pression (grd_p_{V}) sont filtrées par filtre passe-bas.

3. Procédé selon la revendication 2, dans lequel la fréquence limite (f_{G}) du filtrage par filtre passe-bas des valeurs de pression (p_{V_i}, p_{V_i+1}) détectées par capteur et/ou des valeurs calculées du gradient de pression (grd_p_{V}) se situe dans la plage comprise entre 0,1 Hz et 0,3 Hz, y compris les limites de plage (0,1 Hz ≤ f_{G} ≤ 0,3 Hz).

4. Procédé selon l'une des revendications 1 à 3, dans lequel la comparaison du gradient de pression (grd_p_{V}) avec la valeur limite de gradient (grd_pc) n'est pas réalisée lorsque le gradient de pression est positif.

5. Procédé selon l'une des revendications 1 à 4, dans lequel, pendant un fonctionnement de régénération du système d'alimentation en air comprimé (4) et/ou en présence d'un consommateur d'air comprimé consommant en permanence de l'air comprimé, une valeur limite de gradient réduite en conséquence (grd_p_{G_R}) est utilisée (grd_p_{G_R} < grd_pc) lors de la comparaison du gradient de pression (grd_p_{V}) déterminé avec une valeur limite de gradient à la place de la valeur limite de gradient (grd_pc) précédente.

6. Procédé selon l'une des revendications 1 à 5, dans lequel la période de surveillance (T_{M}) est définie comme temps de fonctionnement cumulé du véhicule automobile.

7. Procédé selon l'une des revendications 1 à 5, dans lequel la période de surveillance (T_{M}) est définie comme trajet cumulé du véhicule automobile.

8. Procédé selon l'une des revendications 1 à 5, dans lequel la période de surveillance (T_{M}) est définie comme pause de refoulement cumulée du compresseur (2).

9. Procédé selon l'une des revendications 1 à 8, dans lequel plusieurs comptes de fuites sont tenus pour différentes causes de fuites, **et en ce que** la valeur limite de gradient (grd_pc) et/ou le type et la longueur de la période de surveillance (T_{M}) sont fixés différemment pour la surveillance de différentes causes de fuites.

10. Procédé selon l'une des revendications 1 à 9, dans lequel le calcul des valeurs du gradient de pression (grd_p_{V}) est effectué pour la détection de causes de fuites spécifiées uniquement dans une zone limitée de la pression d'alimentation (p_{V}).
